# FASCICULE DE BREVET EUROPEEN

(11) **EP 1 704 185 B1**
(45) Date de publication et mention de la délivrance du brevet: **18.06.2008**
(21) Numéro de dépôt: 05717381.7
(22) Date de dépôt: 07.01.2005
(51) Int. Cl.: C08L 63/02, C08J 3/24, C08G 59/50, D01F 8/10

(54) **SYSTEME THERMODURCISSABLE REACTIF PRESENTANT UNE DUREE DE STOCKAGE IMPORTANTE**
REAKTIVES HITZEHÄRTENDES SYSTEM MIT LANGER HALTBARKEIT
REACTIVE THERMOSETTING SYSTEM WITH LONG STORAGE LIFE

(30) Priorité: 13.01.2004 FR 0400266
(43) Date de publication de la demande: 27.09.2006
(73) Titulaire: ARKEMA FRANCE, 92700 Colombes (FR)
(72) Inventeur: BONNET, Anthony, F-27170 Beaumont Le Roger (FR); LOERCH, Elisabeth, F-27170 Barc (FR); GERVAT, Laurent, F-40330 Brassempouy (FR); CIPRIANI, Régis, F-27180 Tournedos Bois Hubert (FR); BEAUME, François, F-27300 Bernay (FR)
(74) Mandataire: Mouttet, Marie-Paule
(86) Numéro de dépôt international: PCT/FR2005/000033
(87) Numéro de publication internationale: WO 2005/073314

(56) Documents cités:
- FR-A- 2 841 252
- US-A- 4 393 195

## Description

La présente invention se rapporte au domaine des matériaux thermodurs, particulièrement à un procédé d'obtention de tels matériaux. Elle décrit plus particulièrement un procédé permettant de réaliser à partir de deux formulations traitées séparément de semi-produits tels que textiles ou films réactifs pour composites. Ces semi-produits sont stables lors du stockage mais ils peuvent réagir ensemble lors d'une montée en température pour former le matériau thermodur.

Un matériau thermodur est défini comme étant formé de chaînes polymères de longueur variable liées entre elles par des liaisons covalentes de manière à former un réseau tridimensionnel. Les matériaux thermodurs peuvent être obtenus par exemple par réaction d'une résine thermodurcissable telle qu'un époxy avec un durcisseur de type amine. Les matériaux thermodurs présentent de nombreuses propriétés intéressantes qui les font être utilisés comme adhésifs structuraux ou comme matrice pour des matériaux composites ou encore dans les applications de protection de composants électroniques.

La fibre de renfort, qui peut comporter plusieurs milliers de filaments améliore les caractéristiques mécaniques de la structure composite. Elle peut être composée de verre, de carbone, d'aramide ou de tous autres matériaux organiques ou inorganiques apportant les caractéristiques recherchées.

Les matériaux époxy ont une densité de réticulation élevée, ce qui leur assure une température de transition vitreuse (Tg) élevée et qui confère au matériau d'excellentes propriétés thermomécaniques. Plus la densité de réticulation est élevée, plus haute est la Tg du matériau et par conséquent meilleures sont les propriétés thermomécaniques et plus haute est la température limite d'utilisation du matériau.
Néanmoins leur manipulation reste délicate. Des solutions ont été proposées pour faciliter leur mise en oeuvre. Par exemple FR 2841252 propose une solution basée sur l'utilisation d'un agent régulateur de rhéologie à base de copolymère à blocs permettant ainsi l'obtention de films thermodurcissables. Néanmoins ces matériaux nécessitent un stockage à froid pour éviter que la réaction ne se produise pendant l'étape de stockage.

La demanderesse vient de trouver que des formulations spécifiques à base de matériaux thermodurcissables et d'agents régulateurs de rhéologie peuvent être transformés en objets où l'époxy et son durcisseur sont séparés mais suffisamment proches pour permettre leur réaction ultérieure lors de leur mise en oeuvre tout en permettant auparavant une manipulation aisée et surtout une grande stabilité au stockage.

La solution proposée par la présente invention est basée sur le traitement simultané de deux formulations l'une à base d'une résine thermodurcissable par exemple constituée d'un prépolymère époxyde et d'un agent de contrôle de la rhéologie, l'autre à base de durcisseur et d'un agent de contrôle de la rhéologie.

Le traitement simultané permet l'obtention de semi-produits tels que textiles ou films réactifs pour composites. Ces semi-produits sont stables lors du stockage mais ils peuvent réagir lors d'une montée en température pour former le matériau thermodur souhaité.

Le premier objet de l'invention est un nouveau procédé de préparation de matériaux et d'objets thermodurs. Ce procédé peut être décrit par les étapes suivantes :
a- Préparation d'une formulation (A) à base de prépolymères époxydes et d'agents régulateurs de rhéologie,
b- Préparation d'une formulation (B) à base de durcisseur et d'agents régulateurs de rhéologie,
c- Préparation de semi-produits par traitement simultané des formulations (A) et (B), en respectant si besoin est la stoéchiométrie entre le prépolymère époxyde et le durcisseur, et incluant le cas échéant les fibres, mats, tissus ou tout autre matériau habituellement utilisé dans les matériaux composites,
d- Réalisation des structures souhaitées avec le semi-produit obtenu en c selon des techniques habituelles de mise en oeuvre de semi-produits pour composites thermodurs, comme le drapage, le moulage ou la réalisation de systèmes sandwich.
e- Réaction de la formulation pour obtenir un matériau composite, selon les techniques habituelles de mise en oeuvre des matériaux composites thermodurs par association des formulations, (A) et (B) par apport de température et éventuellement de pression, comme le formage à chaud.

La formulation (A) de l'invention comprend :
- de 1 à 90% en poids du poids total de la formulation d'un agent de contrôle de rhéologie (I) comprenant par exemple au moins un copolymère à blocs choisi parmi les copolymères à blocs S-B-M, B-M et M-B-M dans lesquels:
   ➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
   ➢ M est un polymère miscible avec la résine thermodurcissable, par exemple un homopolymère de méthacrylate de méthyle ou un copolymère comprenant au moins 50% en poids de méthacrylate de méthyle,
   ➢ B est incompatible avec la résine thermodurcissable et avec le bloc M.
   ➢ S est incompatible avec la résine thermodurcissable et avec le bloc B. de 10 à 99% en poids du poids total de la formulation d'au moins une résine thermodurcissable (II).

Elle peut comprendre en outre de 0 à 50 % en poids du poids total de la formulation d'au moins un matériau thermoplastique (III).

La formulation (B) comprend, en poids, de 1 à 90 % d'au moins un durcisseur et de 10 à 99 % d'au moins un agent régulateur de rhéologie (I) . A et B ne contenant pas forcément le même agent régulateur de rhéologie.
Les formulations A et B de l'invention présentent un comportement thermoplastique et peuvent être mises en oeuvre par les techniques habituelles de transformation de matériaux thermoplastiques mais ont la faculté de réagir ensemble pour former un matériau thermodur. Ces formulations peuvent pendant la réaction se trouver dans un état parfaitement liquide ou caoutchouteux.

L'homme du métier sait fixer les quantités à utiliser de A et de B selon l'objet à préparer.

**S'agissant du matériau thermodur** il est défini comme étant formé de chaînes polymères de longueur variable liées entre elles par des liaisons covalentes de manière à former un réseau tridimensionnel.

### A titre d'exemples on peut citer les résines époxy réticulées

Le matériau thermodur provient avantageusement de la réaction d'une résine époxy thermodurcissable et d'un durcisseur. Il est défini aussi comme tout produit de la réaction d'un oligomère porteur de fonctions oxirane et d'un durcisseur. De par les réactions mises en jeu lors de la réaction des ces résines époxy on aboutit à un matériau réticulé correspondant à un réseau tridimensionnel plus ou moins dense selon les caractéristiques de base des résines et durcisseurs employés.

**On entend par résine époxy**, désignée ci-après par E, tout composé organique possédant au moins deux fonctions de type oxirane, polymérisable par ouverture de cycle. Le terme "résines époxy" désigne toutes les résines époxy usuelles liquides à température ambiante (23°C) ou à température plus élevée. Ces résines époxy peuvent être monomériques ou polymériques d'une part, aliphatiques, cycloaliphatiques, hétérocycliques ou aromatiques d'autre part. A titre d'exemples de telles résines époxy, on peut citer le diglycidyl éther de résorcinol, le diglycidyl éther de bisphénol A, le triglycidyl p-amino phénol, le diglycidyléther de bromo-bisphénol F, le triglycidyléther de m-amino phénol, le tétraglycidyl méthylène dianiline, le triglycidyl éther de (trihydroxyphényl) méthane, les polyglycidyl éthers de phénol-formaldéhyde novolac, les polyglycidyls éthers d'orthocrésol novolac et les tétraglycidyl éthers de tétraphényl éthane. Des mélanges d'au moins deux de ces résines peuvent aussi être utilisés.

On préfère les résines époxy possédant au moins 1,5 fonctions oxirane par molécule et plus particulièrement les résines époxy contenant entre 2 et 4 fonctions oxirane par molécule. On préfère également les résines époxy possédant au moins un cycle aromatique comme les diglycidyls éthers de bisphénol A.

**S'agissant du durcisseur** on peut citer :
- Les anhydrides d'acide, parmi lesquels l'anhydride succinique,
- Les polyamines aromatiques ou aliphatiques, parmi lesquelles la diamino diphényl sulphone (DDS) ou encore la méthylène dianiline ou encore la 4,4'-Méthylènebis-(3-chloro-2,6-diéthylaniline) (MCDEA),
- La dicyandiamide et ses dérivés.
- Les imidazoles
- Les acides polycarboxyliques
- Les polyphénols

**On entend par agent de contrôle de rhéologie**, un composé qui, mélangé avec le matériau thermodurcissable, permet à ce dernier de pouvoir être transformé par toutes les techniques de mise en oeuvre des thermoplastiques tout en conservant la faculté de réagir pour former un matériau thermodur. Avantageusement, on choisira un copolymère à blocs choisi parmi les copolymères à blocs S-B-M, B-M ou M-B-M dans lesquels:
➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
➢ M est un polymère miscible avec la résine thermodurcissable. De préférence, M est constitué de monomères de méthacrylate de méthyle ou contient au moins 20% en masse de méthacrylate de méthyle, de préférence au moins 50% en masse de méthacrylate de méthyle. Les autres monomères constituant le bloc M peuvent être des monomères acryliques ou non, être réactifs ou non. Par monomère réactif on entend : un groupement chimique capable de réagir avec les fonctions oxirane des molécules époxy ou avec les groupements chimiques du durcisseur. A titre d'exemples non limitatifs de fonctions réactives on peut citer : les fonctions oxirane, les fonctions amines, les fonctions carboxy. Le monomère réactif peut être l'acide (meth)acrylique ou tout autre monomère hydrolysable conduisant à ces acides. Parmi les autres monomères pouvant constituer le bloc M on peut citer à titre d'exemples non limitatifs le méthacrylate de glycidyle ou le méthacrylate de tertiobutyle. Avantageusement M est constitué de PMMA syndiotactique à au moins 60%.
➢ B est un polymère incompatible avec la résine thermodurcissable et avec le bloc M. Avantageusement la Tg de B est inférieure à 0°C et de préférence inférieure à -40°C. Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques ou encore parmi les poly(diènes) partiellement ou totalement hydrogénés. Parmi les polybutadiènes on utilise avantageusement ceux dont la Tg est la plus faible, par exemple le polybutadiène-1,4 de Tg (vers -90°C) inférieure à celle du polybutadiène-1,2. (vers 0°C). Les blocs B peuvent aussi être hydrogénés. On effectue cette hydrogénation selon les techniques habituelles. Le monomère utilisé pour synthétiser le bloc B élastomérique peut être aussi un (meth)acrylate d'alkyle, on obtient les Tg suivantes entre parenthèses suivant le nom de l'acrylate: l'acrylate d'éthyle (-24°C), l'acrylate de butyle, (-45°C), l'acrylate de 2-éthylhexyle (-60°C), l'acrylate de n octyle (-62°C), l'acrylate d'hydroxyéthyle (-15°C) et le méthacrylate de 2-éthylhexyle (-10°C). On utilise avantageusement l'acrylate de butyle. Les acrylates sont différents de ceux du bloc M pour respecter la condition de B et M incompatibles. De préférence les blocs B sont constitués en majorité de polybutadiène-1,4. B est incompatible avec la résine thermodurcissable et avec le bloc M et sa température de transition vitreuse Tg est inférieure à la température d'utilisation du matériau thermodur,
➢ S est incompatible avec la résine thermodurcissable et avec le bloc B. La Tg ou la Tf de S est avantageusement supérieure à la Tg de B et à 23°C et de préférence supérieure à 50°C. A titre d'exemples de blocs S on peut citer ceux qui dérivent de composés vinylaromatiques tels que styrène, α-méthyl styrène, vinyltoluène, et ceux qui dérivent d'alkyl esters des acides acrylique et/ou méthacrylique ayant de 1 à 18 atomes de carbone dans la chaîne alkyle.

Le copolymère S-B-M, B-M ou M-B-M a une masse molaire moyenne en masse qui peut être comprise entre 10 000 g/mol et 500 000 g/mol, de préférence comprise entre 20 000 et 200 000 g/mol. Avantageusement, exprimée en fraction massique dont le total est 100%, sa composition sera :
Pour M : entre 10 et 80% et de préférence entre 15 et 70%.
Pour B : entre 2 et 80% et de préférence entre 5 et 70%.
Pour S : entre 10 et 88% et de préférence entre 15 et 85%.

Les copolymères blocs utilisés dans les matériaux de la présente invention peuvent être fabriqués par polymérisation anionique par exemple selon les procédés décrits dans les demandes de brevet EP 524.054 et EP 749.987.

Avantageusement la proportion d'agent rhéologique est de 10 à 60% pour respectivement 90 à 40% de résine thermodure.

**Selon une forme préférée de l'invention** l'agent de contrôle de rhéologie comprend au moins un copolymère bloc S-B-M et au moins un copolymère bloc S-B. Il comprend avantageusement entre 5 et 80% de dibloc S-B pour respectivement de 95 à 20% de tribloc S-B-M.

**S'agissant du dibloc S-B** les blocs S et B sont incompatibles et ils sont constitués des mêmes monomères et éventuellement comonomères que les blocs S et les blocs B du tribloc S-B-M. Les blocs S et B peuvent être identiques ou différents des autres blocs S et B présents dans les autres copolymères blocs du modifiant choc dans le matériau thermodur.

Le dibloc S-B a une masse molaire moyenne en masse qui peut être comprise entre 10000 g/mol et 500000 g/mol, de préférence comprise entre 20000 et 200000 g/mol. Le dibloc S-B est avantageusement constitué d'une fraction massique en B comprise entre 5 et 95% et de préférence entre 5 et 60%.

De plus l'avantage de ces compositions est qu'il n'est pas nécessaire de purifier le S-B-M à l'issue de sa synthèse. En effet les S-B-M sont en général préparés à partir des S-B et la réaction conduit souvent à un mélange de S-B et S-B-M qu'on sépare ensuite pour disposer de S-B-M.

Selon une forme avantageuse une partie du S-B-M peut être remplacée par un dibloc S-B. Cette partie peut être jusqu'à 70% en poids du S-B-M.

On ne sortirait pas du cadre de l'invention en remplaçant tout ou partie du tribloc S-B-M par un pentabloc M-S-B-S-M ou M-B-S-B-M. Ils peuvent être preparés par polymérisation anionique comme les di ou triblocs cités plus haut mais en utilisant un amorçeur difonctionnel. La masse molaire moyenne en nombre de ces pentablocs est dans les mêmes intervalles que celle des triblocs S-B-M. La proportion des deux blocs M ensemble, des deux blocs B ou S ensemble est dans les mêmes intervalles que les proportions de S, B et M dans le tribloc S-B-M.

La formulation de l'invention peut être préparée par mélange du prépolymère époxyde et de l'agent régulateur de rhéologie (formule A) et du durcisseur avec l'agent régulateur de rhéologie (formule B) par toutes les techniques de mélange conventionnelles. On pourra utiliser toutes les techniques thermoplastiques permettant de réaliser un mélange homogène entre les deux parties de la résine thermodurcissable et l'agent de contrôle telles que l'extrusion. Le matériau ainsi obtenu non réagi ou partiellement réagi pourra ainsi se présenter sous la forme d'un matériau caoutchoutique manipulable. Les deux types de formules, formule A et formule B peuvent être coextrudées pour former un film non réagi thermoplastique et non réactif tant que les deux parties du film ne sont pas mélangées par un procédé de type compression à chaud.

Il est évident que cette invention peut être appliquée à une résine liquide réactive pouvant former après réaction un polymère linéaire ou branché présentant un comportement thermoplastique.

Les objets finis de l'invention peuvent être utilisés dans diverses applications, comme dans les domaines du sport, de l'industrie, de l'automobile, de l'électronique, de l'aéronautique.

On ne sortirait pas du cadre de l'invention en ajoutant dans la formulation les additifs habituels, tels que des thermoplastiques comme les polyethersulfones, les polysulfones, les polyetherimides, les polyphénylènes éthers, des élastomères liquides ou des modifiant-chocs de type coeur-écorce.

### Conditions de cuisson :

Ce sont les conditions habituelles.

### [Exemples]

On a utilisé les produits suivants :
Résine époxy : il s'agit d'un éther diglycidique du Bisphénol A **(DGEBA)** de masse molaire 383 g/mol avec un nombre moyen de groupe hydroxyle pou r un groupe époxy de n= 0.075, commercialisé par la société VANTICO sous la référence commerciale LY556.
Durcisseur : il s'agit d'un durcisseur **amine** qui est une diamine aromatique, la 4,4'-Méthylènebis-(3-chloro-2,6-diéthylaniline) commercialisé par la société Lonza sous la référence commerciale LONZACURE M-DEA. Ce produit est caractérisé par un point de fusion compris entre 87°C et 90°C et une masse molaire de 310 g/mol.
**SBM1 :** il s'agit d'un copolymère tribloc S-B-M dans lequel S est du polystyrène, B est du polybutadiène et M du polyméthacrylate de méthyle. SBM1 contient 12% en fraction massique de polystyrène, 10% en fraction massique de polybutadiène et 78% en masse de polyméthacrylate de méthyle, obtenu par polymérisation anionique successivement d'un bloc polystyrène de masse molaire moyenne en masse 6 000 g/mol, d'un bloc polybutadiène de masse 5 000 g/mol et d'un bloc polyméthacrylate de méthyle de masse molaire moyenne en masse 40 000 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.
**SBM2 :** il s'agit d'un copolymère tribloc S-B-M dans lequel S est du polystyrène, B est du polybutadiène et M du polyméthacrylate de méthyle. SBM1 contient 13% en fraction massique de polystyrène, 11% en fraction massique de polybutadiène et 74% en masse de polyméthacrylate de méthyle, obtenu par polymérisation anionique successivement d'un bloc polystyrène de masse molaire moyenne en masse 10 400 g/mol, d'un bloc polybutadiène de masse 8 800 g/mol et d'un bloc polyméthacrylate de méthyle de masse molaire moyenne en masse 59 200 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.

### Conditions de cuisson :

Les mélanges sont cuits pendant 2 heures à 220°C.

### Mesure de la température de relaxation mécanique principale, Tα par analyse thermomécanique :

La mesure de Tα a été réalisée par analyse mécanique dynamique sur les échantillons post-cuits à l'aide d'un appareil Rhéométrics (Rheometrics Solid Analyser RSAII). Les échantillons de forme parallélépipédiques (1*2,5*34mm³) sont soumis à un balayage en température entre 50 et 250°C à une fréquence de traction de 1 Hz. La température de transition vitreuse est prise au maximum de tan d.

### Exemple 1 (selon l'invention)

Un SBM1 de Mn totale 51000 g/mole est mélangé avec un DGEBA de masse 383 g/mole par extrusion à 190°C dans une bivis corotative de la société WERNER, pour produire la formule A. La teneur en SBM est de 40%. Le même SBM est mélangé avec la MDEA en utilisant la même bivis corotative, pour produire la formule B, la teneur en SBM est de 40%. Les produits sont extrudés à partir de la formule A et de la formule B. Ces deux types de fils sont ensuite tissés en respectant un grammage permettant d'obtenir la stoéchiométrie entre l'époxyde et l'amine. Le tissu est ensuite placé sous presse pendant 2 h à 200°C. Un matériau thermodurci est obtenu présentant une Tg de 165°C.

### Exemple 2 (selon l'invention)

Un SBM2 de Mn totale 80 000 g/mole est mélangé avec un DGEBA de masse 383 g/mole par extrusion à 190°C dans une bivis corotative de la société WERNER, pour produire la formule A. La teneur en SBM2 est de 40%. Le SBM1 de Mn totale 51 000 g/mole est mélangé avec la MDEA en utilisant la même bivis corotative, pour produire la formule B, la teneur en SBM1 est de 40%. Les produits sont extrudés à partir de la formule A et de la formule B. Ces deux types de fils sont ensuite tissés en respectant un grammage permettant d'obtenir la stoéchiométrie entre l'époxyde et l'amine. Le tissu est ensuite placé sous presse pendant 2 h à 200°C. Un matériau thermodurci est obtenu présentant une Tg de 164°C.

### Exemple 3 (comparatif)

Sur un mélangeur à rouleau sont introduits 40 gr de SBM1 ainsi que 60 gr de mélange époxyde DGEBA de la société DOW chemicals de masse molaire 348,5 gr/mole et d'amine MDEA de la société Lonza. Le DGEBA ainsi que la MDEA sont introduits dans le mélange à stoéchiométrie soit 41,53 gr de DGEBA et 18,47 gr de MDEA. Le mélange est réalisé à 150°C. Après compression le film obtenu est transparent et présente une épaisseur de 100 µm. Le film est manipulable à température ambiante. Après un stockage de 1 mois à température ambiante le film est devenu rigide et cassant et ne peut être manipulé facilement. Sa température de transition vitreuse est de 26°C.

### Exemple 4 ( selon l'invention)

Un SBM1 de Mn totale 51000 g/mole est mélangé avec un DGEBA de masse 383 g/mole par extrusion à 190°C dans une bivis corotative de la société WERNER, pour produire la formule A. La teneur en SBM est de 40%. Le même SBM est mélangé avec la MDEA en utilisant la même bivis corotative, pour produire la formule B, la teneur en SBM est de 40%. Une coextrusion de la formule A et de la formule B est réalisée sur une machine de coextrusion CAST de la société COLLIN. La largeur du film est de 200 mm et son épaisseur totale est de 100 µm. La couche A basée sur la formule A présente une épaisseur de 65 µm et la couche B basée sur la formule B présente une épaisseur de 35 µm. Le film est coextrudé avec un film support polyethylène pour éviter lors de l'enroulement que le film ne colle sur lui-même. Le film après un stockage d'un mois à température ambiante est toujours manipulable le niveau de réaction à l'interface est suffisamment faible pour que le film conserve son caractère thermoplastique. Le film de polyethylène est enlevé sans aucune difficulté de la structure A+B coextrudée. Cette structure est placée dans un moule et comprimée sous 50 kg/cm² pendant 4h à 220°C. Le matériau obtenu présente toutes les caractéristiques d'un matériau thermodur, il ne peut être dissout dans le toluène et présente une température de transition vitreuse de 170°C.

### Exemple 5 (selon l'invention)

Un SBM2 de Mn totale 80 000 g/mole est mélangé avec un DGEBA de masse 383 g/mole par extrusion à 190°C dans une bivis corotative de la société WERNER, pour produire la formule A. La teneur en SBM2 est de 40%. Le SBM1 de Mn totale 51 000 g/mole est mélangé avec la MDEA en utilisant la même bivis corotative, pour produire la formule B, la teneur en SBM1 est de 40%. Une coextrusion de la formule A et de la formule B est réalisée sur une machine de coextrusion CAST de la société COLLIN. La largeur du film est de 200 mm et son épaisseur totale est de 100 µm. La couche A basée sur la formule A présente une épaisseur de 65 µm et la couche B basée sur la formule B présente une épaisseur de 35 µm.

Le film est coextrudé avec un film support polyethylène pour éviter lors de l'enroulement que le film ne colle sur lui-même. Le film après un stockage d'un mois à température ambiante est toujours manipulable le niveau de réaction à l'interface est suffisamment faible pour que le film conserve son caractère thermoplastique. Le film de polyethylène est enlevé sans aucune difficulté de la structure A+B coextrudée. Cette structure est placée dans un moule et comprimée sous 50 kg/cm² pendant 4h à 220°C. Le matériau obtenu présente toutes les caractéristiques d'un matériau thermodur, il ne peut être dissout dans le toluène et présente une température de transition vitreuse de 170°C.

### Exemple 6 (comparatif)

Sur un mélangeur à rouleau sont introduits 40 gr de SBM1 ainsi que 60 gr de mélange époxyde DGEBA de la société DOW chemicals de masse molaire 348,5 gr/mole et d'amine MDEA de la société Lonza. Le DGEBA ainsi que la MDEA sont introduits dans le mélange à stoéchiométrie soit 41,53 gr de DGEBA et 18,47 gr de MDEA. Le mélange est réalisé à 150°C. Après compression le film obtenu est transparent et présente une épaisseur de 100 µm. Le film est manipulable à température ambiante. Après un stockage de 1 mois à température ambiante le film est devenu rigide et cassant et ne peut être manipulé facilement. Sa température de transition vitreuse est de 26°C.

## Revendications

1. Procédé de préparation de matériaux et d'objets thermodurs suivant les étapes suivantes :
a- Préparation d'une formulation (A) comprenant, en poids, de 10 à 99% d'au moins un prépolymère époxyde et de 1 à 90 % d'au moins un agent régulateur de rhéologie (I),
b- Préparation d'une formulation (B) comprenant, en poids, de 1 à 90 % au moins d'un durcisseur et de 10 à 99 % d'au moins un agent régulateur de rhéologie (I),
c- Préparation de semi-produits par un traitement simultané des formulations (A) et (B) selon la nature des matériaux et objets à préparer, en respectant si besoin est la stoéchiométrie entre le prépolymère époxyde et le durcisseur, et incluant le cas échéant les fibres, mats, tissus ou tout autre matériau habituellement utilisé dans les matériaux composites,
d- Réalisation des structures souhaitées avec le semi-produit obtenu en c selon des techniques habituelles de mise en oeuvre de semi-produits pour composites thermodurs, comme le drapage, le moulage, ou la réalisation de systèmes sandwich,
e- Réaction de la formulation pour obtenir un matériau composite, selon les techniques habituelles de mise en oeuvre des matériaux composites thermodurs, comme le formage à chaud,
A et B ne contenant pas nécessairement le même agent régulateur de rhéologie.

2. Procédé suivant la revendication 1 **caractérisé en ce que** l'agent régulateur de rhéologie est au moins un copolymère à blocs choisi parmi les copolymères à blocs S-B-M, B-M et M-B-M dans lesquels:
➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
➢ M est un polymère miscible avec le prépolymère époxyde, par exemple un homopolymère de méthacrylate de méthyle ou un copolymère comprenant au moins 20% en poids de méthacrylate de méthyle,
➢ B est incompatible avec le prépolymère époxyde et avec le bloc M.
➢ S est incompatible avec la résine thermodurcissable et avec le bloc B.

3. Procédé suivant la revendication 2 **caractérisé en ce que** le bloc M est choisi parmi les polyméthacrylates de méthyle et les copolymères comprenant au moins 20% en poids de méthacrylate de méthyle.

4. Procédé suivant la revendication 3 **caractérisé en ce que** les blocs M des copolymères à blocs sont constitués de PMMA syndiotactique à au moins 75%.

5. Procédé selon l'une des revendications 2 à 4 **caractérisé en ce que** les blocs M des copolymères à blocs comprennent en outre des monomères réactifs tels que le méthacrylate de glycidyle, le méthacrylate de tertiobutyle ou l'acide acrylique.

6. Procédé suivant l'une des revendications 2 à 5 **caractérisé en ce que** la Tg des blocs B est inférieure à 0°C, et de préférence inférieure à -40°C.

7. Procédé suivant la revendication 2 **caractérisé en ce que** le bloc B est choisi parmi les poly(acrylate d'alkyle) tels que le polyacrylate de butyle, d'ethyle hexyle ou d'octyle et les polydiènes.

8. Procédé suivant la revendication 7 **caractérisé en ce que** le bloc B est un polybutadiène, 1-4.

9. Procédé suivant la revendication 7 ou 8 **caractérisé en ce que** les diènes du bloc B sont hydrogènés.

10. Procédé suivant la revendication 2 **caractérisé en ce que** la Tg ou la Tf de S est supérieure à 23°C et de préférence supérieure à 50°C.

11. Procédé suivant la revendication 10 **caractérisé en ce que** S est du polystyrène.

12. Procédé suivant l'une des revendications 2 à 11 **caractérisé en ce que** la masse molaire moyenne en masse des copolymères à blocs peut être comprise entre 10 000 g/mol et 500 000 g/mol.

13. Procédé suivant la revendication 12 **caractérisé en ce que** la masse molaire moyenne en masse des copolymères à blocs peut être comprise entre 20 000 g/mol et 200 000 g/mol.

14. Procédé suivant la revendication 1 **caractérisé en ce que** ledit traitement simultané est un co-tissage.

15. Procédé suivant la revendication 1 **caractérisé en ce que** ledit traitement simultané est une co-extrusion.

16. Procédé suivant la revendication 1 **caractérisé en ce que** ledit traitement est une imprégnation par un mélange de poudres.

## Claims

1. Process for preparing thermoset materials and objects according to the following steps:
a- Preparation of a formulation (A) comprising, by weight, from 10 to 99% of at least one epoxide prepolymer and from 1 to 90% of at least one rheology control agent (I);
b- Preparation of a formulation (B) comprising, by weight, from 1 to 90% of at least one hardener and from 10 to 99% of at least one rheology control agent (I);
c- Preparation of semifinished products by a simultaneous treatment of formulations (A) and (B) according to the nature of the materials and objects to be prepared, if need be observing the stoichiometry between the epoxide prepolymer and the hardener, and including, where appropriate, the fibres, mats, woven fabrics or any other material commonly used in composite materials;
d- Production of the desired structures with the semifinished product obtained in c according to the standard techniques for processing semifinished products for thermoset composites, such as moulding, lay-up moulding, or the production of sandwich systems; and
e- Reaction of the formulation to obtain a composite material, according to the standard techniques for processing thermoset composite materials, such as heat forming,
A and B not necessarily containing the same rheology control agent.

2. Process according to Claim 1, **characterized in that** the rheology control agent is at least one block copolymer chosen from S-B-M, B-M and M-B-M block copolymers in which:
➢ each block is connected to the other by means of a covalent bond or one or more intermediate molecules connected to one of the blocks by a covalent bond and to the other block by another covalent bond;
➢ M is a polymer that is miscible with the epoxide prepolymer, for example a methyl methacrylate homopolymer or a copolymer comprising at least 20% by weight of methyl methacrylate;
➢ B is incompatible with the epoxide prepolymer and with the M block; and
➢ S is incompatible with the thermosetting resin and with the B block.

3. Process according to Claim 2, **characterized in that** the M block is chosen from polymethyl methacrylates and copolymers comprising at least 20% by weight of methyl methacrylate.

4. Process according to Claim 3, **characterized in that** the M blocks of the block copolymers are composed of at least 75% syndiotactic PMMA.

5. Process according to one of Claims 2 to 4, **characterized in that** the M blocks of the block copolymers additionally comprise reactive monomers such as glycidyl methacrylate, *tert*-butyl methacrylate or acrylic acid.

6. Process according to one of Claims 2 to 5, **characterized in that** the T_{g} of the B blocks is below 0°C, and preferably below -40°C.

7. Process according to Claim 2, **characterized in that** the B block is chosen from polyalkyl acrylates such as polybutyl acrylate, polyethyl acrylate, polyhexyl acrylate or polyoctyl acrylate and polydienes.

8. Process according to Claim 7, **characterized in that** the B block is a 1,4-polybutadiene.

9. Process according to Claim 7 or 8, **characterized in that** the dienes of the B block are hydrogenated.

10. Process according to Claim 2, **characterized in that** the T_{g} or the Tₘ of S is above 23°C and preferably above 50°C.

11. Process according to Claim 10, **characterized in that** S is polystyrene.

12. Process according to one of Claims 2 to 11, **characterized in that** the weight-average molecular weight of the block copolymers may be between 10 000 g/mol and 500 000 g/mol.

13. Process according to Claim 12, **characterized in that** the weight-average molecular weight of the block copolymers may be between 20 000 g/mol and 200 000 g/mol.

14. Process according to Claim 1, **characterized in that** said simultaneous treatment is a co-weaving.

15. Process according to Claim 1, **characterized in that** said simultaneous treatment is a coextrusion.

16. Process according to Claim 1, **characterized in that** said treatment is an impregnation by a mixture of powders.

## Patentansprüche

1. Verfahren zur Herstellung von Duroplastmaterialien und -gegenständen gemäß den folgenden Schritten:
a- Herstellung einer Formulierung (A), die 10 bis 99 Gew.-% mindestens eines Epoxidpräpolymers und 1 bis 90 Gew.-% mindestens eines Rheologie-Regulationsmittels (I) umfasst,
b- Herstellung einer Formulierung (B), die 1 bis 90 Gew.-% mindestens eines Härters und 10 bis 99 Gew.-% mindestens eines Rheologie-Regulationsmittels (I) umfasst,
c- Herstellung von Halbzeugen durch eine gleichzeitige Behandlung der Formulierungen (A) und (B) gemäß der Natur der herzustellenden Materialien und Gegenstände, wobei falls nötig, die Stöchiometrie zwischen dem Epoxidpräpolymer und dem Härter eingehalten wird, und indem gegebenenfalls Fasern, Matten, Gewebe oder jedes andere Material eingeschlossen wird, das üblicherweise in Verbundmaterialien verwendet wird,
d- Ausführung der gesuchten Strukturen mit dem in c erhaltenen Halbzeug gemäß üblicher Techniken zum Einsatz von Halbzeugen für Duroplastverbundwerkstoffe, wie Laminieren, Formen, oder die Ausführung von Sandwichsystemen,
e- Umsetzung der Formulierung, um ein Verbundmaterial gemäß den üblichen Techniken zum Einsatz von Duroplastverbundmaterialien, wie dem Warmformen, zu erhalten,
wobei A und B nicht unbedingt das gleiche Rheologie-Regulierungsmittel enthalten.

2. Verfahren nach Anspruch 1, **dadurch gekennzeichnet, dass** das Rheologie-Regulierungsmittel mindestens ein Blockcopolymer ist, das aus den Blockcopolymeren S-B-M, B-M und M-B-M ausgewählt ist, wobei:
➢ jeder Block mit dem anderen mittels einer kovalenten Bindung oder einem oder mehreren Intermediärmolekülen verbunden ist, die mit einem der Blöcke durch eine kovalente Bindung und mit dem anderen Block durch eine andere kovalente Bindung verbunden sind,
➢ M ein Polymer ist, das mit dem Epoxidpräpolymer mischbar ist, zum Beispiel ein Methylmethacrylathomopolymer oder ein Copolymer, das mindestens 20 Gew.-% Methylmethacrylat umfasst,
➢ B mit dem Epoxidpräpolymer und mit dem M-Block inkompatibel ist.
➢ S mit dem hitzehärtbaren Harz und mit dem B-Block inkompatibel ist.

3. Verfahren nach Anspruch 2, **dadurch gekennzeichnet, dass** der M-Block ausgewählt ist aus den Polymethylmethacrylaten und den Copolymeren, die mindestens 20 Gew.-% Methylmethacrylat umfassen.

4. Verfahren nach Anspruch 3, **dadurch gekennzeichnet, dass** die M-Blöcke der Blockcopolymere zu mindestens 75 % aus syndiotaktischem PMMA bestehen.

5. Verfahren nach einem der Ansprüche 2 bis 4, **dadurch gekennzeichnet, dass** die M-Blöcke der Blockcopolymere ferner reaktive Monomere, wie etwa Glycidylmethacrylat, tert-Butylmethacrylat oder Acrylsäure umfassen.

6. Verfahren nach einem der Ansprüche 2 bis 5, **dadurch gekennzeichnet, dass** die Tg der B-Blöcke kleiner als 0°C, und bevorzugt kleiner als -40 °C ist.

7. Verfahren nach Anspruch 2, **dadurch gekennzeichnet, dass** der B-Block ausgewählt ist aus den Poly(alkylacrylaten), wie etwa Polybutylacrylat, Polyethylhexylacrylat oder Polyoctylacrylat und Polydienen.

8. Verfahren nach Anspruch 7, **dadurch gekennzeichnet, dass** der B-Block ein 1,4-Polybutadien ist.

9. Verfahren nach Anspruch 7 oder 8, **dadurch gekennzeichnet, dass** die Diene des B-Blocks hydrogeniert sind.

10. Verfahren nach Anspruch 2, **dadurch gekennzeichnet, dass** die Tg oder die Tf von S größer als 23 °C und bevorzugt größer als 50 °C ist.

11. Verfahren nach Anspruch 10, **dadurch gekennzeichnet, dass** S Polystyrol ist.

12. Verfahren nach einem der Ansprüche 2 bis 11, **dadurch gekennzeichnet, dass** der Gewichtsmittelwert des Molekulargewichts der Blockcopolymere im Bereich zwischen 10.000 g/Mol und 500.000 g/Mol liegen kann.

13. Verfahren nach Anspruch 12, **dadurch gekennzeichnet, dass** der Gewichtsmittelwert des Molekulargewichts der Blockcopolymere im Bereich zwischen 20.000 g/Mol und 200.000 g/Mol liegen kann.

14. Verfahren nach Anspruch 1, **dadurch gekennzeichnet, dass** die gleichzeitige Behandlung ein gleichzeitiges Weben ist.

15. Verfahren nach Anspruch 1, **dadurch gekennzeichnet, dass** die gleichzeitige Behandlung eine Coextrusion ist.

16. Verfahren nach Anspruch 1, **dadurch gekennzeichnet, dass** die Behandlung eine Imprägnierung mit einem Pulvergemisch ist.
